# EUROPEAN PATENT APPLICATION

(11) **EP 2 015 212 A1**
(43) Date of publication of application: **14.01.2009**
(21) Application number: 07012808.7
(22) Date of filing: 29.06.2007
(51) Int. Cl.: G06F 21/00

(54) **Portable mass storage device with hooking process**

(71) Applicant: Axalto S.A., 92190 Meudon (FR)
(72) Inventor: Aussel, Jean-Daniel c/o Axalto SA Intellectual Property Dpt, 92197 Meudon Cédex (FR)
(74) Representative: Cour, Pierre

(57) **Abstract**

The invention relates to a portable mass storage device (1) comprising a security application. The security application is executable by a termirial (2) when the terminal (2) is connected with said device (1). The security application is arranged, when executed by the terminal (2), to secure at least a subset of the processes running on the terminal (2) by hooking said processes.

## Description

The invention relates to portable mass storage devices connectable to terminals such as personal computers, and comprising security features for protecting applications running on the terminal.

Several secure portable mass storage solutions exist, such as the U3 portable USB application platform, bootable USB mass storage keys with embedded operating systems, or the Citrix USB key embedding a thin-client terminal.

In the U3 portable USB application platform, inserting the key launches a launch pad. Applications running on the personal computer have to be adapted to the U3 platform by recompiling and linking them with the SDK, and added to the launch pad. This is not always possible, since the code of the applications is not always available. Moreover the user has to use the U3 launch pad instead of the operating system usual shell or desktop. Not all operating systems applications, shell and desktop are available for safe execution with the U3 framework.

With bootable USB mass storage keys, the user boots the terminal from the key, on a complete operating system, most often variants of linux, or Windows. This requires the issuer of the bootable USB mass storage keys to act as a provider of a linux operating system distribution, to have a license from Microsoft to embed preinstalled versions of Windows operating system, or to force the user to install Windows on the key, which can be tricky. Moreover, in both linux and windows cases, some terminals do not have advanced BIOS features that allow booting from a USB mass storage key.

With Citrix USB keys, the insertion of the USB key forces the execution of an Internet browser such as internet explorer, and launches the Citrix thin-client terminal form the browser. The Citrix thin-client terminal then connects the browser to the Citrix server. Only applications available on the Citrix server are then available to the user. No applications can be run if the network connection is unavailable.

It is an object of the invention to propose a portable mass storage device with a security application, which imposes fewer constraints on the terminal and on the applications to be secured.

The problem is solved thanks to the portable mass storage device according to claim 1, which hooks the processes created by the applications to be secured. Hooking consists in dynamically (i.e. at runtime) modifying the machine code of the process in order to add/remove/modify features.

The device according to invention claim 1 is advantageous over the previous solutions, due in particular to the fact that:
- It does not require booting another operating systems on the portable mass storage device. Connecting the device when the user has already booted an operating system such as windows or linux will cause the monitoring and hooking process to start (automatically or manually), and to secure all applications running on the terminal,
- It does not require a network connection for executing applications; the user can freely execute applications stored on the terminal or on the portable mass storage device.
- It does not require a special launch pad; any application residing on the terminal or on the device can be monitored and hooked on the fly when run by the terminal.
- It is much less restrictive regarding the range of applications which can be secured, as it does not require compilation of the applications with an SDK. Operating systems calls can be monitored and hooked after the device connection, so that security and privacy is ensured.

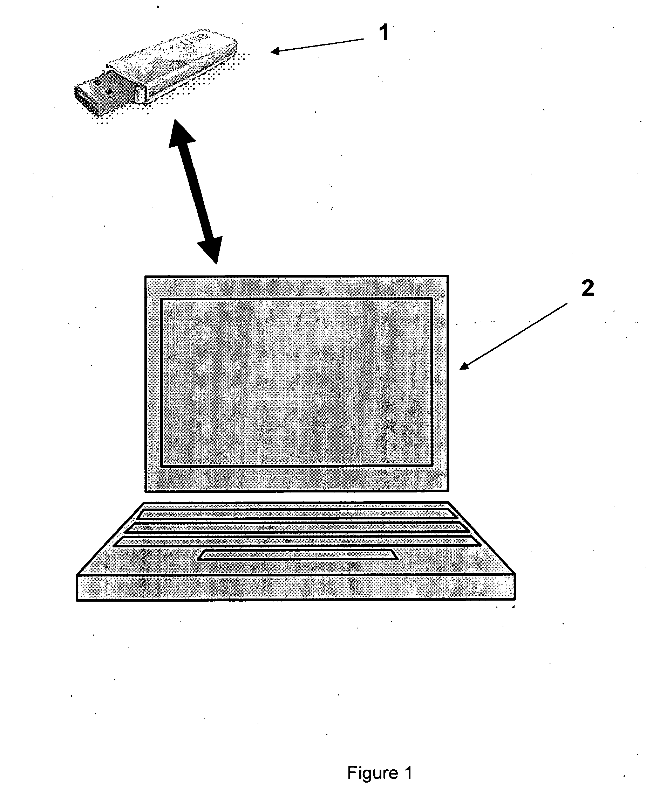

The invention and its advantages will be explained more in details in the following specification referring to the appended drawing, in which Figure 1 represents an example of portable mass storage device (a USB key 1) connecting with a terminal (a laptop computer 2).

According to a preferred embodiment, connecting the portable device with the terminal consists in inserting it in a slot in the terminal (e.g. USB slot). However, other types of connections are possible (including wireless connections such as WiFi, IR, Bluetooth, etc.), i.e. there is not necessarily a physical connection (i.e. not necessarily any action of the user other than being close enough from the terminal).

According to a preferred embodiment, the connection of the device in the USB slot launches a monitoring and hooking process. This process monitors the launch of applications, and is hooks the operating system services which are deemed insecure in order to force unsafe operations to be filtered and replaced by safer ones. As known in the art, when an application is executed on a terminal, it typically launches one or more processes. Preferably, the hook forces all persistent operations to be performed on the device. Alternatively, the process can hook already launched applications, and force the operating system services to save persistent information on the secure mass storage. This process may also monitor the secure mass storage removal event, so that all safely launched applications are closed upon key removal.

A hooking mechanism may be used for inserting software into another piece of software. The term "hook" refers to the software that gets inserted into another piece of software.

For example, in Microsoft^{™} Windows operating systems, when a set of services (such as low level functions for reading and writing special types of files from and to a hard drive) is implemented in the form of a DLL, the hooking may consist in loading the hook (a substitute DLL) when a process using this DLL is launched. Therefore when the process later executes and attempts to load the real DLL, the Microsoft^{™} Windows operating system considers that the real DLL has already been loaded and discards the call.

Thanks to this substitution, the applications do not need to be modified by their developers, and do not even need to be aware of the existence of the hook. No involvement of and no information from the applications are needed, as long as the hook behaves as the normal DLL from the application's perspective. The hook does not necessarily have to operate on a DLL, it can also operate on static libraries or on any other components, however DLLs are a preferred target. How to hook a DLL when a process using this DLL is launched is described more in details below.

Operating systems comprise process creation notification mechanisms, such as the PsSetCreateProcessNotifyRoutine routine available on Microsoft^{™} Windows 2000 and MicroSoft^{™} Windows XP operating systems.

Such notification mechanism can be used to force the operating system to execute a hooking mechanism whenever a Microsoft^{™} Windows process is created.

The first step of the hooking mechanism according to a preferred embodiment consists in loading the real DLL, and the hook (substitution DLL). For example, the first step may consist in calling the Microsoft^{™} Windows LoadLibrary function which maps the specified DLL file into the address space of the MicroSoft^{™} Windows process detected by the above notification mechanism.

The second step of the hooking mechanism according to a preferred embodiment consists in locating the functions of the DLL that have just been loaded. Calling the Microsoft^{™} Windows GetProcAddress function for each function of the smart card services components is one way to execute this second step.

A third step of the hooking mechanism according to a preferred embodiment consists in replacing the location of the functions of the real DLL by the location of the functions of the substitution DLL (the hook). For example, the hooking mechanism can inject machine instructions code at the address of each of the DLL function, causing each function to jump to the hooking function. The original machine instruction code overwritten by the jump instructions is preferably saved.

In a fourth step, the execution of the MicroSoft^{™} Windows process detected by the above notification mechanism is resumed.

Therefore, if the process detected by the notification mechanism is using the target DLL, this process will attempt to load it in order to use it. However, Microsoft^{™} Windows will consider that the DLL has already been loaded and will ignore the attempt to load it and further attempts to locate its functions as this has already been done.

Subsequent attempts of the application to use the DLL functions consequently result in the hook functions being used instead. The hook (substitution DLL) may consist of a wrapper for the target DLL, i.e. it does not necessarily have to re-implement the DLL in full, but can instead simply execute security tasks (such as encrypting before writing) and then call the real DLL function. In case original machine instruction code was overwritten, the stored original machine instructions have to be executed first before calling the original DLL function. Security tasks can also be executed after the real DLL function is called (e.g. for reading data with the regular DLL, and then adding extra operations such as decrypting what was just read), or in certain instances security tasks may be executed partially before and completed after the call of the real DLL function. It is also possible to modify the parameters of the DLL functions called by the process. In particular, instead of writing to the local hard drive, it is possible to write to the portable mass storage device, in order not to leave any information on the terminal which is potentially unsafe. It is also possible to add, remove or otherwise filter the communications. In preferred embodiments, the monitoring process identifies whether a read or write operation deals with sensitive data, and only reroutes such sensitive read/write operations to the device, since other operations do not present major risks and would consume resources on the device. Other types of hooking mechanisms may be implemented, either on Microsoft^{™} Windows or on other operating systems. Also, multiple hooking mechanisms can be implemented, since there might be different types of DLLs which may have to be secured. In such cases, the hooking mechanism may be repeated for each Microsoft^{™} Windows process detected by the notification mechanism as many times as they are target DLLs to hook. This allows safer and seamless execution of applications on a potentially unsafe terminal.

The hooking may also provides security against malicious software on the terminal, i.e. all read/write data access can be monitored and filtered by the monitoring and hooking process, and undesired accesses from Trojan horses and other malware can be detected and disabled on the fly.

The invention may also enhance security, by replacing the loading of unsafe terminal applications on the fly by the loading of equivalent safe applications from the secure mass storage. E.G. An application which was subject to a major security weakness, and for which a security patch is available but was not installed on the terminal, can be replaced by the up to date application, provided the up to date application is available on the device.

In preferred embodiments, the security application of the device (which may comprise several components such as the monitoring process etc., and which may even refer to a set of security applications, but the singular is used for the sake of simplicity) identifies whether a given process is not sensitive or not, and not hook it if it's not. The identifications may be based on a process identifier, where process identifier refers to any information in the process or the application which started the process which can be used to determine the "identifty" of the process (e.g. it may be a word processor version X from vendor Y).

A typical use case of the device is the following. The device contains an autorun program that embeds a monitoring and hooking process. As known in the art, Autorun refers to the ability to have removable media (CD-ROM, Floppy, etc...) automatically execute certain actions immediately after the connection (e.g. insertion of the media into a computer). Autorun is commonly interchanged with the term "Autoplay", which has the same meaning. When inserting the device in a USB port, the monitoring and hooking process is started. An informational dialog may be displayed to inform the user that all applications will be protected by the device, and for example, safely store and retrieve application data to and from the secure mass storage. The background color or graphics of the operating system desktop may be modified to clearly show to the user that he is executing in a safer environment. When launching a new application, either residing on the terminal or the secure mass storage, the monitoring and hooking process hooks and modify operating system calls to force all write operations on the mass storage key and all read operations first on the device, and second on the terminal if not found on the device.

In a first example, when the user starts the Outlook Express mail client after the secure mass storage key is inserted, the mail parameters are read from the device instead of the usual operating system folders. When receiving mails, all mails are stored in the mailbox located on the device.

In a second example, when the user starts an Office application such as excel, the My Documents folder points to the My Documents folder of the device, and all write operations outside the mass storage device are either disabled or performed after a dialog box warning.

In a third example, when the user starts an old unsafe release of Internet Explorer from the terminal desktop, the monitoring process forces the loading of the safer recent release of internet explorer program located on the secure mass storage key. The device may regularly connect to a server via a network (e.g. Internet connection of the terminal) in order to obtain the last version of the relevant applications.

When unplugging safely the mass storage key using the eject hardware operating system option, the user may be requested to first close all safely opened applications.

When unsafely unplugging the mass storage key without using the eject hardware option, a warning dialog may inform the user of all outstanding safely opened applications and close them. Alternatively, the user can plug back the secure mass storage to gracefully close down applications. Indeed, when closing an application, the application may store the context in which it was closed in order to resume properly next time it is open, and this cannot happen if the context is stored on the device, which was disconnected.

Optionally, a monitoring window can display safe processes and log all accesses to the device and to the regular file system of the terminal.

When the autorun feature is disabled on the PC, the user notices that the informational dialog that informs of safe execution is not displayed, and that the operating system desktop remains unchanged. An initialization program is located on the secure mass storage, and launching the initialization program starts the monitoring and hooking process, displays the safe execution dialog box and modifies the desktop to show clearly safe execution. The device may therefore comprise both automatic and manual triggering of the security application of the device.

## Claims

1. A portable mass storage device (1) comprising a security application, the security application being executable by a terminal (2) when the terminal (2) is connected with said device (1), said device (1) being **characterized in that** the security application is arranged, when executed by the terminal (2), to secure at least a subset of the processes running on the terminal (2) by hooking said processes.

2. The device (1) according to claim 1, wherein the security application is arranged, when executed by the terminal (2), to monitor the launch of new processes on the terminal (2).

3. The device (1) according to claim 1 or 2, comprising automatic triggering means for the security application to be executed by the terminal (2) automatically upon connection of said device (1) with the terminal (2).

4. the device (1) according to claim 3 wherein the automatic triggering means comprise an Autorun.

5. The device (1) according to any previous claim, comprising manual execution means for the security application to be executed by the terminal (2) when so instructed by a user of the terminal (2).

6. The device (1) according to claim any previous claim, wherein the security application is set to classify certain running processes as sensitive, and to hook the sensitive processes.

7. The device (1) according to claim 6 wherein the security application is set to classify processes launched by software applications stored on said device (1) as sensitive.

8. The device (1) according to claim 6 wherein the device (1) stores a list of sensitive processes identifiers, and wherein the security application is set to classify a process as sensitive when its identifier belongs to the list.

9. The device (1) according to any previous claim, wherein securing the processes comprises using the hook in order to replace some read and/or write operations from/to the terminal (2) by read and/or write operations from/to said device (1).

10. The device (1) according to claim 9 wherein the security application is set to classify certain read and/or write operations as sensitive, and to replace the sensitive read and/or write operations.

11. The device (1) according to any previous claim, wherein, the terminal (2) comprising unplug means for instructing the terminal (2) to prepare for disconnection of the device (1), the security application is set to detect the actuation of said unplug means, and to display on the terminal (2) a warning message requesting to close all hooked processes before disconnection of said device (1) from said terminal (2).

12. The device (1) according to claim any previous claim, wherein the security application is set to close all hooked processes upon disconnection of said device (1) from said terminal (2).

13. The device (1) according to any claim from 1 to 11, wherein the security application is set to detect, upon disconnection of the device (1), whether some hooked processes are still running, and to display a warning message in case not all hooked processes have been dosed, the warning message suggesting to reconnect the device (1) in order to avoid crashing the hooked processes.

14. The device (1) according to claim 13, wherein if the device (1) is reconnected, the security application is set to force the hooked processes to close properly.

15. The portable mass storage device (1) according to any previous claim, wherein said device (1) is a smart card.

16. The portable mass storage device (1) according to claim 15, wherein said device (1) has the form factor of a USB key.

17. The portable mass storage device (1) according to any previous claim, wherein the security application is set to
a. detect that a process has been launched by an old version of an application,
b. upon positive detection, look for a more recent version of the application,
c. provided a more recent application is found, kill the process, and start the more recent application.

18. The portable mass storage device (1) according to claim 17, wherein said device (1) stores a set of applications, and updates them regularly.
